# EUROPEAN PATENT APPLICATION

(11) **EP 4 480 731 A1**
(43) Date of publication of application: **25.12.2024**
(21) Application number: 23180457.6
(22) Date of filing: 20.06.2023
(51) Int. Cl.: B60K 28/16, B60W 10/20, B60W 30/18, B60W 50/14, B62D 6/00

(54) **METHOD, SYSTEM, VEHICLE, COMPUTER PROGRAM AND STORAGE MEDIUM FOR GENERATING TRACTION FOR A VEHICLE IN SLIPPERY ROAD CONDITIONS**

(71) Applicant: Polestar Performance AB, 405 31 Gothenburg (SE)
(72) Inventor: ALBINSSON, Anton, 443 50 Lerum (SE); SALIF, Ramadan, 418 77 Göteborg (SE)
(74) Representative: Zacco Sweden AB

(57) **Abstract**

The present invention relates to a method, a system, a vehicle and a computer-readable storage medium and a computer program product. The method comprises obtaining (401), based on sensor data obtained from a sensor system (130) of the vehicle (1), a low-traction indication responsive to determining (403) a low-traction condition being satisfied for a first wheel of the one or more wheels (A-D) of the vehicle. The method further comprises determining (405) a respective steer input for actuating (407) the first wheel of the one or more wheels between a first and a second operational wheel angle, based on the determined low-traction condition for that wheel. Further, the method comprises providing (409) a steer input signal by applying (411) an oscillating actuation to the first wheel based on the determined respective steer input; and enhancing (413) the traction for the first wheel of the vehicle with the applied oscillating actuation to the first wheel.

## Description

### TECHNICAL FIELD

The disclosed technology relates to methods and systems for generating an enhanced traction for one or more wheels of a vehicle during a low-traction road condition. In particular, but not exclusively the aspects and embodiments of the disclosed technology relate to enhancing the traction for the one or more wheels of the vehicle by applying an oscillating actuation to the one or more wheels.

### BACKGROUND

When vehicles encounter reduced friction conditions, such as slippery or hazardous road surfaces caused by rain, snow, or the presence of sand, it poses significant challenges in maintaining control and stability. In such situations, vehicles may experience slipping, which not only hampers the driver's ability to maneuver the vehicle as intended.

The issues stemming from insufficient grip or traction on slippery road surfaces demand diligent attention, particularly due to the implications for safety, efficiency, and sustainability. Compromised traction severely impedes a driver's ability to maintain vehicle control, significantly elevating the risk of accidents and collisions. Slippery conditions not only hinder maneuverability but may also compromise braking performance and overall vehicle stability.

Enhancing traction also holds the key to optimizing vehicle efficiency in the face of slippery conditions. When wheels experience slippage, the engine must compensate by exerting additional effort to counteract the loss of traction. This additional strain leads to decreased fuel efficiency, ultimately resulting in heightened energy consumption and increased emissions. Moreover, compromised vehicle performance in low-grip scenarios translates to reduced acceleration capabilities and elongated braking distances, further impairing fuel economy. Additionally, the strain exerted on various vehicle components due to low traction poses durability concerns. The drivetrain, suspension systems, and braking mechanisms are particularly susceptible to premature wear and tear.

Furthermore, slip-induced wheel spinning may accelerate tire wear, necessitating more frequent tire replacements and contributing to resource depletion. By ameliorating slipping and fortifying grip, the longevity of key components such as tires can be prolonged, reducing material consumption, minimizing waste generation, and lowering the environmental footprint associated with tire production. In this manner, the development of innovative traction-enhancing solutions aligns with the broader objective of fostering sustainable practices within the automotive industry.

There is thus a need in the art for novel and improved solutions and applications for addressing the issue of low traction on slippery roads and consequently achieving improved safety, and efficiency.

### SUMMARY

The herein disclosed technology seeks to mitigate, alleviate or eliminate one or more of the aboveidentified deficiencies and disadvantages in the prior art to address various problems relating to low traction in low-traction or slippery road conditions.

Various aspects and embodiments of the disclosed invention are defined below and in the accompanying independent and dependent claims. The term exemplary is in the present context to be understood as serving as an instance, example or illustration.

According to a first aspect of the present disclosure there is provided a computer-implemented method for generating an enhanced traction for one or more wheels of a vehicle during a low-traction road condition. The method comprises obtaining, based on sensor data obtained from a sensor system of the vehicle, a low-traction indication responsive to determining a low-traction condition being satisfied for a first wheel of the one or more wheels of the vehicle. The method further comprises determining a respective steer input for actuating the first wheel of the one or more wheels between a first and a second operational wheel angle, based on the determined low-traction condition for that wheel. Further, the method comprises providing a steer input signal by applying an oscillating actuation to the first wheel based on the determined respective steer input. The method further comprises enhancing the traction for the first wheel of the vehicle with the applied oscillating actuation to the first wheel.

In several exemplary embodiments, the method may further comprise determining the low-traction condition being satisfied for the first wheel of the one or more wheels of the vehicle based on sensor data indicative of an operational velocity of the vehicle and sensor data indicative of a registered wheel-rotation for at least the first wheel of the one or more wheels of the vehicle.

In several exemplary embodiments, the method may further comprise determining the low-traction condition being satisfied for the first wheel of the one or more wheels based on a calculated disparity parameter for the operational velocity of the vehicle and a reference velocity corresponding to the registered wheel-rotation for at least the first wheel of the one or more wheels of the vehicle. In response to the calculated disparity parameter falling outside an allowable disparity threshold, the method may further comprise generating the respective low-traction indication for the first wheel.

In several exemplary embodiments, the method may further comprise determining the steer input based at least partly on a current operational velocity of the vehicle. In several exemplary embodiments, the operational velocity of the vehicle may correspond to a standstill velocity or to a low-speed velocity falling below a specific velocity threshold.

In several exemplary embodiments, the oscillating actuation may have a respective oscillation frequency, which may be determined at least partly based on a current operational velocity of the vehicle.

In several exemplary embodiments, the method may further comprise obtaining the low-traction indication responsive to determining the low-traction condition being satisfied for a second wheel of the one or more wheels of the vehicle. The method may further comprise determining the respective steer input for actuating the second wheel of the one or more wheels between the first and the second operational wheel angle, based on the determined low-traction condition for that wheel. Further, the method may comprise providing the steer input signal by applying the oscillating actuation to the second wheel based on the determined respective steer input. The method may further comprise applying the oscillating actuation to the second wheel synchronously or asynchronously with respect to the oscillating actuation applied to the first wheel.

In several exemplary embodiments, the method may further comprise adjusting a trajectory of motion of the vehicle by steering the second wheel based on a resulting trajectory of motion of the vehicle in response to the oscillating actuation applied to the first wheel. Alternatively, or additionally the method may comprise adjusting a trajectory of motion of the vehicle by applying the respective oscillating actuation to the second wheel based on a resulting trajectory of motion of the vehicle in response to the oscillating actuation applied to the first wheel. In some exemplary embodiments, the method may comprise a combination of the above i.e. applying the respective oscillating actuation to the second wheel and steering the second wheel based on the resulting trajectory of motion of the vehicle in response to the oscillating actuation applied to the first wheel. In some embodiments, the applied oscillations or steering may be continuously adjusted until a satisfactory grip and trajectory of motion for the vehicle is attained.

In several exemplary embodiments, the method may further comprise transmitting an alert signal to a driver of the vehicle. The alert signal may comprise a haptic and/or audible and/or visual alert signal in response to the applied steer input signal to the first and/or the second wheel in order to alert the driver of the vehicle that the enhanced traction is being applied to the one or more wheels.

In several exemplary embodiments, the method may further comprise determining that the low-traction condition may no longer be satisfied for the first and/or second wheels. In response to determining that the low-traction condition may no longer be satisfied, the method may further comprise terminating application of the oscillating actuation to the first and/or second wheels and enabling the vehicle for following a resulting trajectory of motion based on the applied steer input signals.

According to a second aspect of the present disclosure there is provided a computer-readable storage medium comprising instructions which, when executed by one or more processors of a computing device of a vehicle, causes the computing device to carry out the method according to any one of the embodiments of the method of the first aspect herein.

According to a third aspect of the present disclosure there is provided a computer program product comprising instructions which, when the program is executed by one or more processors of a computing device of a vehicle, causes the computing device to carry out the method according to any one of the embodiments of the method of the first aspect herein.

According to a fourth aspect of the present disclosure there is provided a system for generating an enhanced traction for one or more wheels of a vehicle during a low-traction road condition. The system comprises processing circuitry configured for obtaining, based on sensor data obtained from a sensor system of the vehicle, a low-traction indication responsive to determining a low-traction condition being satisfied for a first wheel of the one or more wheels of the vehicle. The processing circuitry is further configured for determining a respective steer input for actuating the first wheel of the one or more wheels between a first and a second operational wheel angle, based on the determined low-traction condition for that wheel. Further, the processing circuitry is configured for providing a steer input signal by applying an oscillating actuation to the first wheel based on the determined respective steer input. The processing circuitry is further configured for enhancing the traction for the first wheel of the vehicle by means of applying the oscillating actuation to the first wheel.

In several exemplary embodiments, the processing circuitry may be further configured for determining the low-traction condition being satisfied for the first wheel of the one or more wheels of the vehicle based on sensor data indicative of an operational velocity of the vehicle and sensor data indicative of a registered wheel-rotation for at least the first wheel of the one or more wheels of the vehicle.

In several exemplary embodiments, the processing circuitry may be further configured for determining the low-traction condition being satisfied for the first wheel of the one or more wheels based on a calculated disparity parameter for the operational velocity of the vehicle and a reference velocity corresponding to the registered wheel-rotation for at least the first wheel of the one or more wheels of the vehicle. In response to the calculated disparity parameter falling outside an allowable disparity threshold, the processing circuitry may further be configured for generating the respective low-traction indication for the first wheel. In several exemplary embodiments, the processing circuitry may be further configured for determining the steer input based at least partly on a current operational velocity of the vehicle.

In several exemplary embodiments, the processing circuitry may be further configured for obtaining the low-traction indication responsive to determining the low-traction condition being satisfied for a second wheel of the one or more wheels of the vehicle. The processing circuitry may be further configured for determining the respective steer input for actuating the second wheel of the one or more wheels between the first and the second operational wheel angle, based on the determined low-traction condition for that wheel. The processing circuitry may be further configured for providing the steer input signal by applying the oscillating actuation to the second wheel based on the determined respective steer input. The processing circuitry may be further configured for applying the oscillating actuation to the second wheel synchronously or asynchronously with respect to the oscillating actuation applied to the first wheel.

In several exemplary embodiments, the processing circuitry may be further configured for transmitting an alert signal comprising a haptic and/or audible and/or visual alert signal in response to the applied steer input signal to the first and/or the second wheel in order to alert a driver of the vehicle of the enhanced traction being applied to the one or more wheels.

According to a fifth aspect of the present disclosure there is provided a vehicle comprising a sensor system comprising one or more vehicle-mounted sensor devices and a system according to any one of the embodiments of the system according to the fourth aspect of the present disclosure.

Further embodiments of the different aspects are defined in the dependent claims.

It is to be noted that all the embodiments, elements, features and advantages associated with the first aspect also analogously apply to the second, third, fourth and the fifth aspects of the present disclosure.

These and other features and advantages of the present disclosure will in the following be further clarified in the following detailed description.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.
Figs. 1a-b illustrate schematic side and top views of a vehicle in accordance with several embodiments of the present disclosure.
Figs. 2a-b show schematic top view illustrations of the vehicle and wheel positions of the vehicle in accordance with several embodiments of the present disclosure.
Fig. 3 shows a schematic block diagram illustration of a control system of the vehicle in accordance with several embodiments of the present disclosure.
Fig. 4 shows a schematic flowchart illustrating a method in accordance with several embodiments of the present disclosure.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

In the following description of exemplary embodiments, the same reference numerals denote the same or similar components.

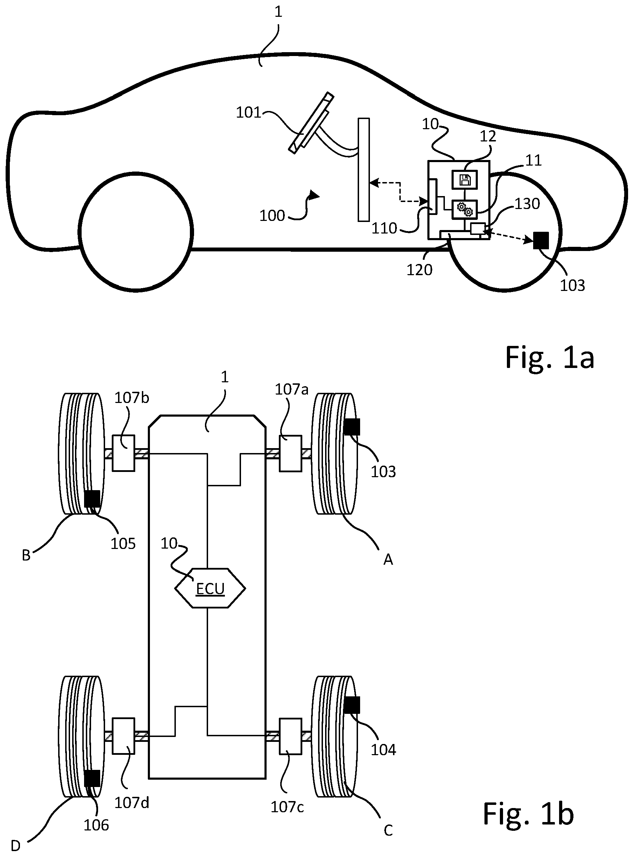

Figs. 1a-b illustrate schematic illustrations of a side and corresponding top view of an exemplary vehicle 1 and wheel locations "A-D" thereon according to several embodiments of the present disclosure. It should be clear to the skilled person in the art that the vehicle herein may comprise any number of wheels according to the type of the vehicle. For example, the vehicle may be a passenger vehicle having four wheels as shown in the example of Figs. 1a-b, or a transportation vehicle such as a heavy-duty truck or towing vehicle comprising 18 wheels or more with single wheels or twin wheels. As used herein, a "vehicle" is any form of motorized transport. For example, the vehicle may be any road vehicle such as a car, a motorcycle, a (cargo) truck, a bus, etc. The vehicle may be an electrical vehicle (EV) or a hybrid vehicle. In several aspects and embodiments, the vehicle may comprise an Automated Driving System, ADS 140. In several aspects and embodiments, the vehicle comprises a control system 10 comprising processing circuitry 11 configured for performing various embodiments and steps of the technology presented herein. In several embodiments and aspects, the control system 10 may comprise a memory 12 comprising instructions and program code executable by the processing circuitry 11 for performing various aspects of the methods and technologies disclosed herein.

In several embodiments and aspects, the vehicle 1 comprises a steering mechanism 100. The steering mechanism may be a mechanical steering mechanism or may be a steer-by-wire (SBW) steering system. SBW system is an electronic technology used in automobiles to replace the mechanical connection between the steering wheel 101 and the wheels. Instead of a physical linkage, sensors detect the driver's steering input, and electronic signals are sent to actuators e.g. exemplary actuators 107a-d shown in Fig. 1b to turn the wheels accordingly. In ADS-equipped vehicles, the SBW system may receive a signal from the ADS and accordingly actuate the wheels based on the steering input from the ADS 140. Compared to traditional mechanical steering systems, steer-by-wire offers potential advantages such as weight reduction, increased design flexibility, and the ability to integrate with advanced driver-assistance features.

However, it should be appreciated that the systems and methods herein are equally applicable to vehicles not having the steer-by-wire mechanism. In other words, the traction enhancing and steering technology described herein is not limited to vehicles with a steer-by-wire system only, but may be applied to vehicles wherein the steering mechanism is based on mechanical connection of a steering column device and a steering rack device connected to the one or more wheels of the vehicle. Thus, in several embodiments, the vehicle may comprise a steering column comprising a steering wheel 101, steering shaft, etc.

In several embodiments and aspects, the vehicle 1 comprises a sensor system 130 configured for providing measurements and detecting various operations of different parts and components of the vehicle 1. The sensor system 130 may be configured for collection of information about the surrounding environment of the vehicle 1. The surrounding environment of the vehicle can be understood as a general area around the vehicle 1 in which scenarios comprising objects (such as other vehicles, landmarks, obstacles, etc.) or scenes can be detected and identified by vehicle sensors (radar, LIDAR, cameras, etc.), i.e. within a sensor range of the vehicle. The sensor system may further comprise sensors for detecting steering angles i.e. rotation angles of the one or more wheels of the vehicle 1. The sensor system 130 may also comprise sensor devices configured for detecting operation of the steering system of the vehicle, e.g. the SBW system such as sensor devices for detecting operation of a steering motor or actuator for steering the one or more wheels. The sensor devices may be configured for detecting a position of the actuator of the steering motor of the SBW. ADS or autonomous systems comprised in the vehicle may also be in communication with the sensor system 130 of the vehicle. The control system of the vehicle may comprise a steering control unit. The control system may be implemented on-board the vehicle in order to read and collect sensor readings from various types of sensor devices of the sensor system. The sensor system of the vehicle 1 may also comprise a localization system configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. The localization system may further comprise inertial measurement units (IMUs). The vehicle control system 10 of the vehicle 1 may thus be configured to obtain vehicle data associated with a position and/or operational velocity and/or acceleration of the vehicle 1. The sensor system 130 may accordingly comprise accelerometer sensors that measure the acceleration forces acting on the vehicle. They can detect changes in velocity and are used for various applications such as electronic stability control, rollover detection, and adaptive suspension systems. These sensors can be mounted at different locations within the vehicle, such as the chassis or inside the airbag control module. Further, brake force sensors may be used to measure the amount of force applied to the brakes by the driver. These sensors can provide valuable information for brake system performance, brake balance, and enable features like brake assist. They are typically integrated into the brake pedal assembly or located in the hydraulic brake lines. Gyroscope sensors measure the rate of rotation or angular velocity of a vehicle. They are commonly used in electronic stability control systems to detect and correct oversteer or understeer conditions. Gyroscopes can also be utilized in navigation systems, rollover detection, and advanced driver-assistance systems. In several embodiments, the vehicle may comprise wheel sensors e.g. wheel sensors 103 - 106 shown in Figs. 1a-b arranged on-board the vehicle 1. Wheel sensors may typically include tire sensors which may be located in or on the tires or rims or wheel hubs of the wheels of the vehicle. The wheel sensors may be configured for providing readouts of the wheel rotations. Wheel sensors 103 - 106 may include wheel speed sensors configured to measure the rotational speed of each wheel. Wheel speed sensors provide input to various vehicle systems, including anti-lock braking systems (ABS), traction control systems (TCS), and stability control systems. In ADS-equipped vehicles, the ADS commonly combines a variety of sensors to perceive the vehicle's surroundings, such as e.g. radar, LIDAR, sonar, camera, navigation system e.g. GPS, odometer and/or IMU, upon which advanced control systems may interpret sensory information to identify appropriate navigation paths, as well as obstacles, free-space areas, and/or position and/or a general standing of the vehicle.

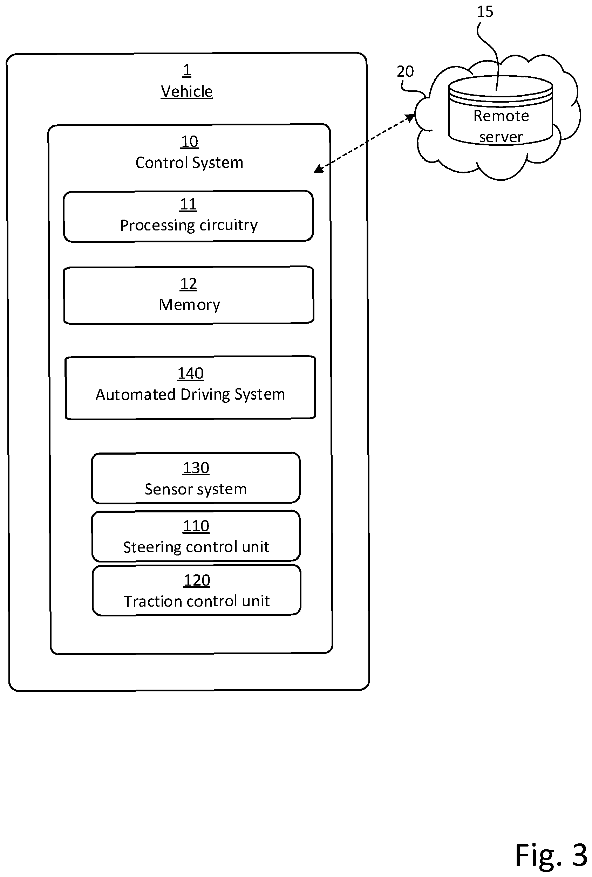

As mentioned previously and as shown in the example of Fig. 3, the vehicle 1 comprises a control system 10, which may otherwise be referred to as the control apparatus 10. The control system 10 of the vehicle 1 comprises control circuitry 11, otherwise referred to as processing circuitry 11, configured to obtain sensor data from the sensor system 130 of the vehicle 1. The control system 10 may be implemented as an electronic control unit (ECU) 10.

Various aspects and embodiments of the presented technology, and the corresponding systems and methods may be implemented and executed by means of processing circuitry comprising one or more processors. The processing circuitry may at least partly be comprised in the control system 10 or apparatus implemented in the vehicle 1. In some embodiments, the control system 10 and processing circuitry may be a decentralized system and be implemented at least partly in the remote server 15 in communication with the vehicle 1. The control system 10 may further comprise modules and units configured for performing operations including steering or traction control. Accordingly, in several embodiments herein as shown in exemplary Fig. 3, the control system 10 comprises a steering control unit 110 and a traction control unit 120. The steering control unit 110 may be configured for controlling the rotation of one or more wheels of the vehicle, receiving steer input and/or actuating the motors and actuators adapted for steering the one or more wheels. In several embodiments herein, the traction control unit 120 may be adapted to be in communication with the steering control unit 110. The traction control unit 120 may be configured for determination of slip or low-traction conditions for the vehicle e.g. on slippery road conditions. In several embodiments and aspects herein, the control system 10 or the steering control unit 110 and the traction control unit 120 are configured to determine a low-traction condition i.e. slipping for the vehicle 1. The slipping or low-traction condition may be determined for one, two, or several wheels of the vehicle. In several embodiments, the low-traction conditions may be determined based on the sensor data obtained from the sensor system 130 of the vehicle 1. For simplicity, in the rest of the description the control system 10 or the processing circuitry 11 of the control system 10 would be mentioned for carrying out several operations intended for determining the slipping conditions as well as traction enhancement operations and technologies presented herein. The control system 10 is configured for obtaining, based on sensor data obtained from a sensor system of the vehicle, a low-traction indication responsive to determining a low-traction condition being satisfied for a first wheel of the one or more wheels of the vehicle.

The control system 10 may be configured for determining that the vehicle is slipping based on the sensor data obtained from the sensor system 130 of the vehicle 1 including velocity information of the vehicle as well as sensor data received from the wheel sensors of the vehicle. In some embodiments, the control system 10 may be configured for determining slipping conditions for one or more wheels of the vehicle 1 based on the vehicle position information e.g. obtained from the localization system indicative of GPS-based position of the vehicle. In several embodiments, the processing circuitry may be configured for determining the low-traction condition being satisfied for the one or more wheels e.g. for the first wheel, based on sensor data indicative of an operational velocity of the vehicle and sensor data indicative of a registered wheel-rotation for at least the first wheel. In other words, sensor data received from the wheel sensors as well as from acceleration or vehicle speed sensors may be utilized for determination of slipping. In several embodiments, a difference between the operational velocity of the vehicle and the registered wheel rotation obtained from wheel sensors of the wheels may be utilized. The processing circuitry may be configured for determining the low-traction condition being satisfied for the first wheel based on a calculated disparity parameter for the operational velocity of the vehicle and a reference velocity corresponding to the registered wheel-rotation for at least the first wheel. Stated differently, indication of slipping (low-traction indication) may be determined for a wheel based on the determined velocity difference between the operational velocity of the vehicle and wheel rotation. Therefore, a low-traction indication may be based on sensor signals obtained from the sensor system of the vehicle indicating a discrepancy among two or more sensor parameters e.g. vehicle velocity and the wheel rotation speed values. In response to the calculated disparity parameter falling outside an allowable disparity threshold, the processing circuitry may be further configured for generating the respective low-traction indication for the first wheel. It should be appreciated that even though the determination of the low-traction conditions is explained for the first wheel, it is analogously applicable to the other wheels of the vehicle. In several embodiments, the control system 10 may be configured for evaluating the operational status of the one or more wheels sequentially or in parallel for determination of slipping conditions for each wheel. Thus, slipping may be determined for only one or several wheels of the vehicle at an instance of the vehicle experiencing low-traction conditions. In some exemplary embodiments, the control system 10 may be configured for reducing torque on one wheel to get a good vehicle velocity reference of that wheel. In some embodiments, if it is determined that the vehicle is slipping or a wheel of the vehicle is slipping, information regarding a current angle of that wheel and changes in the angle of that wheel during slip conditions may be obtained from the wheel sensors. The control system 10 may utilize this information for determination of steer input required for regaining traction for the slipping wheel as will be explained in detail further below. Disparity threshold may be a specific value e.g. when the difference between the vehicle speed and the wheel rotational speed surpasses a predetermined extent. The disparity threshold may also be an allowable range e.g. +/- 3 - 5km/h difference between the two velocities is allowable and normal but more than that would be an indication of slipping.

The control system 10 and the processing circuitry 11 are configured for generating an enhanced traction for one or more wheels of a vehicle during a low-traction road condition. As previously mentioned, the processing circuitry of the control system 10 may be configured for obtaining the low-traction indication responsive to determining a low-traction condition being satisfied for a first wheel of the one or more wheels of the vehicle. In several embodiments, the low-traction indication may be determined based on sensor signals and sensor data indicating presence of a slip condition. In some embodiments, an intermediate analysis of the sensor data may be performed by the processing circuitry prior to determination of the low-traction condition, or by the steering control unit 110 or by the traction control unit 120 or by the sensor system directly. In some exemplary embodiments, additionally or alternatively the obtained sensor signals may be used directly as being indicative of a slip condition. In some exemplary embodiments, depending on the conditions and also the type of the vehicle a second, third, fourth, fifth, etc. wheels of the vehicle may be susceptible to slip. Accordingly, the sensor system of the vehicle may transmit to the processing circuitry, low-traction indications responsive to determining low-traction conditions being satisfied for the second, third, fourth, fifth, etc. wheel of the vehicle. In some embodiments, the control system 10 may obtain the status for the one or more wheels of the vehicle and alert and indicate occurrence of slip or low-traction conditions for any of the wheels of the vehicle that may be experiencing the slip conditions. Therefore, when aspects, embodiments, and features are presented with respect to the first wheel in the context of the present disclosure, it should be appreciated that the features and solutions are intended for the slipping wheels of the vehicle.

Moreover, the control system 10 is configured for determining a respective steer input for actuating the first wheel of the one or more wheels between a first and a second operational wheel angle, based on the determined low-traction condition for that wheel. Stated differently, in response to the indication of slipping for the first wheel, the processing circuitry is configured to determine how much steering is required for the slipping wheel to regain traction on the road. Furthermore, the processing circuitry is configured to determine an angular range for steering of the slipping wheel by actuating the slipping wheel. In other words, the processing circuitry is configured for determining how large the range of angles i.e. between the first and the second angles should be in order to provide sufficient grip and traction for the slipping wheel or wheels. In several embodiments, determination of steer input may at least partly be based on the current operational velocity of the vehicle. For instance, at higher vehicle speed smaller angles of steering and actuating the wheel may be determined and applied. At lower vehicle speeds however, a larger angular range of steering and actuating the wheels may be determined and applied to the slipping wheels. In some embodiments, determination of steer input may further be determined based on the amount of the difference between the current operational speed of the vehicle and the wheel rotation speed. In other words, if the quantity of the disparity parameter is large e.g. at low vehicle speeds, wherein the wheel rotation registers a very high wheel rotation speed then larger steering input and angles may be applied and so forth. In another example, at low vehicle speeds when the wheel rotation registers a smaller wheel rotation speed, then smaller steering angles may be applied.

In some embodiments, the determination of steer input may further be based on driver input, and/or lateral velocity or lateral displacement of the vehicle and/or slip time. For instance, if too much lateral displacement is determined based on the sensor data or if the vehicle is stuck in the slippery condition like wheels buried and rotating freely in the snow without traction, the steer input may be determined to be applied for a certain duration of time or in a specific manner. For instance, it may be determined that the wheels should be actuated and steered inwards or outwards simultaneously for 30seconds, 1, 2, 3, 5 minutes or the like.

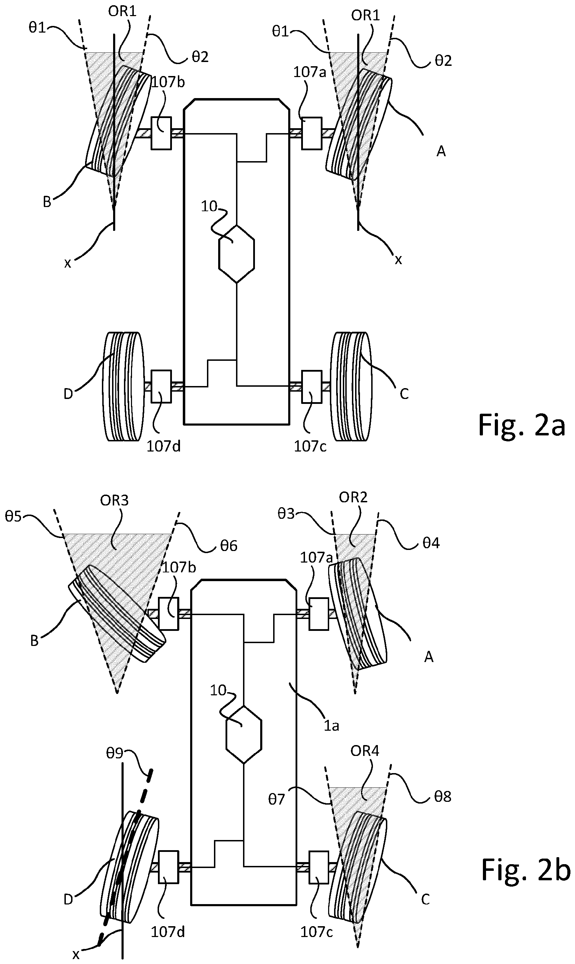

Further, the control system is configured for providing a steer input signal by applying an oscillating actuation to the first wheel based on the determined respective steer input. Stated differently, when a steer input required for counteracting the slipping of the wheel is determined, the determined steer input is applied to the slipping wheel by means of an oscillatory actuation of the slipping wheel between the first and second operational angles. This may in some embodiments be realized by oscillating the slipping wheel in left and right directions relative to a reference straight or parallel position (line "X") of the wheel as shown in Figs. 2a and 2b. In several embodiments, as shown for the exemplary wheels "A" and "B" of Fig. 2a the slipping wheels e.g. the two front wheels "A" and "B" of the vehicle 1 may be steered homogeneously i.e. synchronized, in matching directions, matching oscillations, oscillation frequencies and durations. For instance the dashed lines showing a first operational actuation angle θ1 representing a first limit of the angular steering range and angle θ2 representing a second limit of the angular steering range. The first and second angles θ1 and θ2 defining an oscillation range OR1 for oscillatory actuation of the wheels "A" and "B".

In several embodiments however, the slipping wheels may be steered in an asynchronous manner i.e. the wheels may be actuated to oscillate in opposite directions (e.g. one or more wheels inward and one or more wheels outward), with different frequencies and/or for varying durations. The amount of steering input determined for the one or more slipping wheels may be similar, the same, or different which may be determined for each wheel independently based on the low-traction condition experienced by each slipping wheel. For instance, in Fig. 2b it is depicted that the front wheels and rear wheels are steered and actuated in oscillatory manner in left and right directions using different setting values, different angular ranges, different oscillatory ranges and/or different oscillation frequencies. For instance, in Fig. 2b it is shown that the front wheel "B" is actuated between angular limits θ5, θ6 with the OR3 being larger than that of the front wheel "A" steered at angular limits θ3, θ4 and OR2. The angular range θ3, θ4 is smaller than the angular range θ5, θ6 in this example. Furthermore, the wheel "A" is actuated in an opposite direction (inward-outward) than wheel "B" (outward-inward), wherein inward and outward directions are relative to the body or chassis 1a of the vehicle 1, inwards direction being toward the chassis and the outward direction away from the chassis. The wheels are oscillated back and forth at their respective frequency and for a respective duration in the in- and outward directions and between the determined steer angles. In Fig. 2b the rear wheels "C" and "D" are actuated in a different manner. For instance, wheel "C" is actuated at the angular range θ7, θ8 and with the oscillatory range OR4, while wheel "D" is not actuated in an oscillatory manner, but rather steered under steer angle θ9 in a specific direction e.g. inward direction in this example. In some embodiments, steering one wheel e.g. wheel "D" while oscillating other wheels e.g. wheels "A" and "B" may be utilized for correcting a trajectory of motion of the vehicle as it will be explained further in the following.

It should be appreciated that the mentioned scenario is an exemplary operation of the presented technology and other variations of application of the oscillatory actuation and steering input to the slipping wheels are accordingly comprehensible without departing from the scope of the claims.

The control system 10 may accordingly be configured for accordingly enhancing the traction for the first wheel of the vehicle with the applied oscillating actuation to the first wheel. This way the first wheel and the vehicle regain traction and the slippery condition is terminated.

The present inventors have thus realized that by determining the amount of steering input needed for regaining traction for a slipping wheel and applying the determined steer input by actuating the slipping wheels in an oscillatory manner, an effective and noticeably quick traction enhancement for the slipping wheels can be generated. Consequently, embodiments and aspect of the present disclosure aim at improving the traction capabilities in slippery conditions. For instance, in a low-traction conditions where excessive slip is detected but the vehicle speed is at standstill (e.g. according to GPS-based measurements it is determined that the vehicle is stuck in the snow), then the wheel angles will be swept by determined oscillating actuation of the slipping wheel angles between right and left in order to find grip. The proposed approach has a high degree of flexibility and can be customized for each slipping wheel based on the slip conditions experienced by that wheel.

In several embodiments, the processing circuitry may be configured for applying the oscillating actuation at a respective oscillation frequency, which is determined at least partly based on a current operational velocity of the vehicle. Stated differently, similar to determination of the steer input, in lower vehicle velocities the slipping wheels may be actuated under larger wheel steer angles as well as slower oscillation frequencies compared to higher vehicle speeds at which smaller steer angles at higher oscillation frequencies may be applied. In several embodiments and aspects, after an initial grip is regained based on initially determined steer input, wheel steer angular range, oscillation frequency and duration, a following step of fine tuning the wheel actuation may ensue to further improve the traction. The fine tuning steer input may have updated steer input values, angular range, oscillation frequencies and duration.

In several aspects and embodiments, the operational velocity of the vehicle may correspond to a standstill velocity or to a low-speed velocity falling below a specific velocity threshold. For example, the intended operational vehicle velocity may be below an intended operational value e.g. the vehicle should move at 30km/h but the GPS registers a vehicle speed of 20 km/h, whereas the wheel sensors register a wheel rotation at 40km/h. In another example the classic of the vehicle may be at standstill and only rotation of wheels is registered at 10km/h by the wheel sensors. These exemplary scenarios are accordingly indications of the low-traction conditions at which the enhanced grip will be required. In these vehicle speed ranges, the driver may also accept more longitudinal slip and some lane deviation in order to regain grip and get unstuck. The present inventors have realized that for operational vehicle velocities corresponding to low-speed ranges below a specific velocity threshold e.g. an exemplary speed range between 0 (standstill) - 30 km/h, or 0 - 10 km/h, or exemplary range 10 - 20 km/h, or exemplary range 20 - 30 km/h, the proposed methods and technology herein are specifically advantageous to regain and enhance traction. Consequently, the vehicle being equipped with the proposed technology would be prevented from being stuck in the slippery conditions or if lost traction, be assisted to regain grip and get unstuck from the slippery situation by means of the embodiments of the system and methods herein. For instance, in a scenario it may be determined that the current operational velocity of the vehicle falls below the velocity threshold of 10 km/h and one or more wheels are experiencing slip conditions. Accordingly, thee traction enhancement methods and systems herein could assist the vehicle to regain traction.

In several embodiments, as mentioned previously, the processing circuitry may further be configured for obtaining the low-traction indication responsive to determining the low-traction condition being satisfied for a second wheel of the one or more wheels of the vehicle. Further, the processing circuitry may be configured for determining the respective steer input for actuating the second wheel of the one or more wheels between the first and the second operational wheel angle, based on the determined low-traction condition for that wheel. The processing circuitry may accordingly be configured for providing the steer input signal by applying the oscillating actuation to the second wheel based on the determined respective steer input. In several embodiments, the processing circuitry is configured for applying the oscillating actuation to the second wheel synchronously or asynchronously with respect to the oscillating actuation applied to the first wheel. In other words, the steer input applied to the second wheel may be different from the first wheel or it may be the same. Thus, in some scenarios all slipping wheels will receive steering. In some exemplary embodiments, only some wheels e.g. front wheels will receive steering and in some examples rear wheels will be steered. In some exemplary embodiments, steering one wheel (e.g. Wheel "D" in Fig. 2b) may be used to adjust errors in trajectory resulting from steering one other wheel. In some exemplary embodiments, the wheels may be steered and actuated with synchronous or asynchronous steer input parameters. In some exemplary embodiments, the processing circuitry may be configured for adjusting a trajectory of motion of the vehicle by applying the respective oscillating actuation to the second wheel based on a resulting trajectory of motion of the vehicle in response to the oscillating actuation applied to the first wheel e.g. wheel "C" in Fig. 2b. In other words, the trajectory of vehicle may be adjusted by steering the second wheel and based on a trajectory resulting from steering the first wheel in order to compensate for errors in trajectory of the vehicle as a result of application of oscillatory steering of the first wheel. This way, not only the vehicle is enabled to regain traction in the slippery conditions, but also if lane deviation or lateral sliding may have occurred during the process of getting unstuck it will also be corrected and compensated for. In several embodiments and aspects, the fist wheel may be a front wheel mounted on a front axel, and the second wheel may be a rear wheel mounted on a rear axel of the vehicle. In several embodiments, steering the second wheel for correcting vehicle trajectory e.g. the rear axle wheel steering, does not have to be oscillatory (as for the example of wheel "D" in Fig. 2b), and specific actuations of the wheels depend on the resulting vehicle motion and trajectory from the first wheel steering action. In some exemplary embodiments, trajectory of vehicle may be adjusted by a combination of the above i.e. applying the respective oscillating actuation to the second wheel and steering the second wheel (non-oscillatory steering) based on the resulting trajectory of motion of the vehicle in response to the oscillating actuation applied to the first wheel. In some embodiments, the applied oscillations or steering may be continuously adjusted until a satisfactory grip and trajectory of motion for the vehicle is attained.

In several aspects and embodiments, the processing circuitry may be configured for transmitting an alert signal comprising a haptic or audible or visual alert signal. The alert signal may be transmitted in response to the applied steer input signal to the first and/or the second wheel in order to alert a driver of the vehicle of the enhanced traction for the one or more wheels. In some embodiments, the alert signal may be continually applied e.g. a vibrating steering wheel of the vehicle during the oscillatory actuation process of the slipping wheels.

In several aspects and embodiments, the processing circuitry may be further configured for determining that the low-traction condition is no longer satisfied for the first and/or second wheels. In response to determining that the low-traction condition is no longer satisfied, the processing circuitry may be further configured for terminating application of the oscillating actuation to the first and/or second wheels; and enabling the vehicle for following a resulting trajectory of motion of the vehicle based on the applied steer input signal. Stated differently, when an appropriate steer angle is found to be effectively restoring and enhancing traction, the oscillating actuation may be stopped, the found steer angle kept and motion of vehicle with the enhanced traction be monitored. In some examples, the oscillatory actuation and application of the steer input signal may be resumed based on the changed conditions e.g. if the vehicle loses traction again. Accordingly, determination and application of steer input may be a continuous and repetitive process by finding the appropriate steer angle, enhancing traction, monitoring traction and if necessary, based on the new traction and grip conditions, applying further adjustments and oscillations to enhance and regain grip.

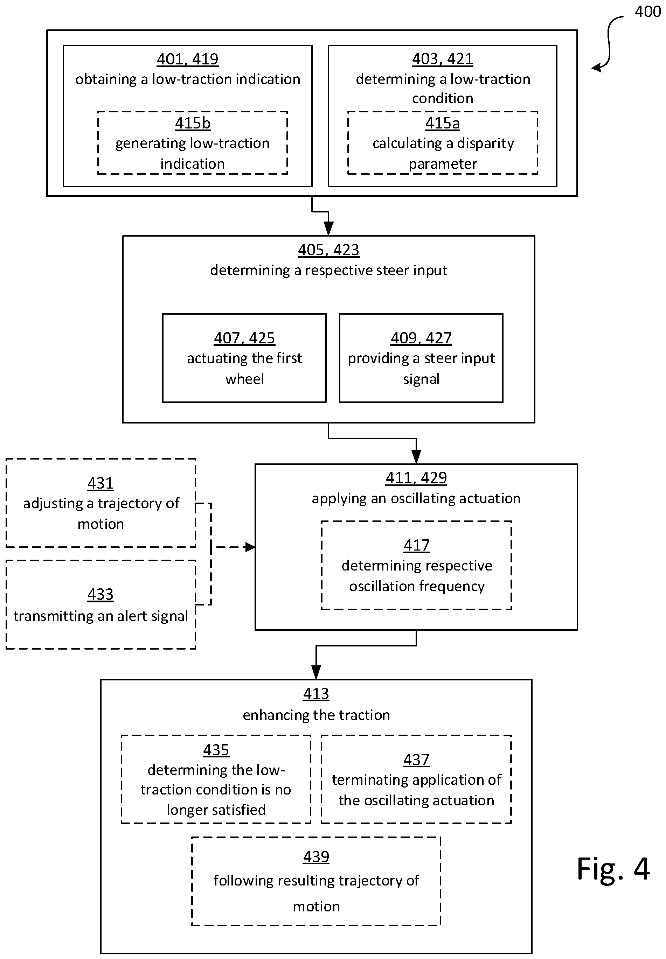

Fig. 4 shows a flowchart of a method **400** according to various aspects and embodiments of the present disclosure and with reference to the technology presented in Fig. 1 - Fig. 3. The computer-implemented method **400** is for generating an an enhanced traction for one or more wheels of a vehicle during a low-traction road condition. The method **400** comprises obtaining **401**, based on sensor data obtained from a sensor system of the vehicle, a low-traction indication responsive to determining **403** a low-traction condition being satisfied for a first wheel of the one or more wheels of the vehicle.

The method further comprises determining **405** a respective steer input for actuating **407** the first wheel of the one or more wheels between a first and a second operational wheel angle, based on the obtained determined low-traction condition for that wheel. Further, the method comprises providing **409** a steer input signal by applying **411** an oscillating actuation to the first wheel based on the determined respective steer input. The method further comprises enhancing **413** the traction for the first wheel of the vehicle with the applied oscillating actuation to the first wheel.

In several embodiments and aspects, the method **400** may further comprise determining **403** the low-traction condition being satisfied for the first wheel of the one or more wheels of the vehicle based on sensor data indicative of an operational velocity of the vehicle and sensor data indicative of a registered wheel-rotation for at least the first wheel of the one or more wheels of the vehicle.

In several embodiments and aspects, the method **400** may further comprise determining **403** the low-traction condition being satisfied for the first wheel of the one or more wheels by calculating **415a** a disparity parameter for the operational velocity of the vehicle and a reference velocity corresponding to the registered wheel-rotation for at least the first wheel of the one or more wheels of the vehicle. In response to the calculated disparity parameter falling outside an allowable disparity threshold, the method may further comprise generating **415b** the respective low-traction indication for the first wheel.

In several embodiments and aspects, the method **400** may further comprise determining the steer input based at least partly on a current operational velocity of the vehicle. In several embodiments, the oscillating actuation has a respective oscillation frequency, and the method may further comprise determining **417** the respective oscillation frequency of the oscillating actuation of the first wheel based at least partly on the current operational velocity of the vehicle. In several embodiments, the operational velocity of the vehicle corresponds to a standstill velocity or to a low-speed velocity falling below a specific velocity threshold.

In several embodiments and aspects, the method **400** may further comprise obtaining **419** the low-traction indication responsive to determining **421** the low-traction condition being satisfied for a second wheel of the one or more wheels of the vehicle. The method may further comprise determining **423** the respective steer input for actuating **425** the second wheel of the one or more wheels between the first and the second operational wheel angle, based on the determined low-traction condition for that wheel. The method may further comprise providing **427** the steer input signal by applying the oscillating actuation to the second wheel based on the determined respective steer input. Further, the method may comprise applying **429** the oscillating actuation to the second wheel synchronously or asynchronously with respect to the oscillating actuation applied to the first wheel.

In several embodiments and aspects, the method **400** may further comprise adjusting **431** a trajectory of motion of the vehicle by steering the second wheel or by applying the respective oscillating actuation to the second wheel based on a resulting trajectory of motion of the vehicle in response to the oscillating actuation applied to the first wheel.

In several embodiments and aspects, the method **400** may further comprise transmitting **433** an alert signal comprising a haptic and/or audible and/or visual alert signal in response to the applied steer input signal to the first and/or the second wheel in order to alert a driver of the vehicle of the enhanced traction being applied to the one or more wheels.

In several embodiments and aspects, the method **400** may further comprise determining **435** that the low-traction condition is no longer satisfied for the first and/or second wheels and in response to determining that the low-traction condition is no longer satisfied:
terminating **437** application of the oscillating actuation to the first and/or second wheels; and
enabling **439** the vehicle for following a resulting trajectory of motion based on the applied steer input signals. As mentioned previously, in several embodiments the process of determination and oscillatory application of the determined steer input may be a continuous process. In some embodiments, the method may revert to any of steps 405, 423, 409, 427, 411, 429, 413, 417 as appropriate and repeat the steps if needed. When an appropriate steer angle is found, it may be maintained for improved traction.

In some embodiments, the embodiments of the method **400** may be executed by the processing circuitry 11 of the control system 10. In several aspects and embodiments, the vehicle may comprise an Automated Driving System, ADS. In several aspects and embodiments, the method **400** may be performed by the control system 10 of the vehicle 1 comprising the ADS system configured for performing the various embodiments and steps of the method **400.** In several aspects and embodiments, the method **400** may be performed by a control system of the server 15 or data center comprising processing circuitry configured for performing the various embodiments and steps of the method **400.**

It should be noted that all the embodiments, elements, features, examples and advantages described earlier with reference to the control system 10 of the vehicle 1, or the processing circuitry 11 of the control system 10, analogously and equally apply to various embodiments of the methods **400** described herein with reference to Fig. 4.

Executable instructions for performing these functions and embodiments of the method **400** are, optionally, included in a non-transitory computer-readable storage medium or other computer program product configured for execution by one or more processors.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution 20. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method for generating an enhanced traction for one or more wheels of a vehicle during a low-traction road condition, the method comprising:
obtaining, based on sensor data obtained from a sensor system of the vehicle, a low-traction indication responsive to determining a low-traction condition being satisfied for a first wheel of the one or more wheels of the vehicle;
determining a respective steer input for actuating the first wheel of the one or more wheels between a first and a second operational wheel angle, based on the determined low-traction condition for that wheel;
providing a steer input signal by applying an oscillating actuation to the first wheel based on the determined respective steer input; and
enhancing the traction for the first wheel of the vehicle with the applied oscillating actuation to the first wheel.

2. The method according to claim 1, wherein the method further comprises:
determining the low-traction condition being satisfied for the first wheel of the one or more wheels of the vehicle based on sensor data indicative of an operational velocity of the vehicle and sensor data indicative of a registered wheel-rotation for at least the first wheel of the one or more wheels of the vehicle.

3. The method according to claim 2, wherein the method further comprises:
determining the low-traction condition being satisfied for the first wheel of the one or more wheels based on a calculated disparity parameter for the operational velocity of the vehicle and a reference velocity corresponding to the registered wheel-rotation for at least the first wheel of the one or more wheels of the vehicle; and
in response to the calculated disparity parameter falling outside an allowable disparity threshold, generating the respective low-traction indication for the first wheel.

4. The method according to any one of claims 1-3, wherein the method further comprises:
determining the steer input based at least partly on a current operational velocity of the vehicle.

5. The method according to any one of claims 1-4, wherein the oscillating actuation has a respective oscillation frequency, which is determined at least partly based on a current operational velocity of the vehicle.

6. The method according to any one of claims 2-5, wherein the operational velocity of the vehicle corresponds to a standstill velocity or to a low-speed velocity falling below a specific velocity threshold.

7. The method according to any one of the preceding claims, wherein the method further comprises:
obtaining the low-traction indication responsive to determining the low-traction condition being satisfied for a second wheel of the one or more wheels of the vehicle;
determining the respective steer input for actuating the second wheel of the one or more wheels between the first and the second operational wheel angle, based on the determined low-traction condition for that wheel;
providing the steer input signal by applying the oscillating actuation to the second wheel based on the determined respective steer input; wherein the method further comprises:
applying the oscillating actuation to the second wheel synchronously or asynchronously with respect to the oscillating actuation applied to the first wheel.

8. The method according to claim 7, wherein the method further comprises:
adjusting a trajectory of motion of the vehicle by steering the second wheel or by applying the respective oscillating actuation to the second wheel based on a resulting trajectory of motion of the vehicle in response to the oscillating actuation applied to the first wheel.

9. The method according to any one of the preceding claims, wherein the method further comprises:
transmitting an alert signal comprising a haptic and/or audible and/or visual alert signal in response to the applied steer input signal to the first and/or the second wheel in order to alert a driver of the vehicle of the enhanced traction being applied to the one or more wheels.

10. The method according to any one of the preceding claims, wherein the method further comprises:
determining that the low-traction condition is no longer satisfied for the first and/or second wheels and in response to determining that the low-traction condition is no longer satisfied:
terminating application of the oscillating actuation to the first and/or second wheels; and
enabling the vehicle for following a resulting trajectory of motion based on the applied steer input signals.

11. A computer-readable storage medium comprising instructions which, when executed by one or more processors of a computing device of a vehicle, causes the computing device to carry out the method according to any one of the preceding claims.

12. A computer program product comprising instructions which, when the program is executed by one or more processors of a computing device of a vehicle, causes the computing device to carry out the method according to any one of claims 1 - 10.

13. A system for generating an enhanced traction for one or more wheels of a vehicle during a low-traction road condition, wherein the system comprises processing circuitry configured for:
obtaining, based on sensor data obtained from a sensor system of the vehicle, a low-traction indication responsive to determining a low-traction condition being satisfied for a first wheel of the one or more wheels of the vehicle;
determining a respective steer input for actuating the first wheel of the one or more wheels between a first and a second operational wheel angle, based on the determined low-traction condition for that wheel;
providing a steer input signal by applying an oscillating actuation to the first wheel based on the determined respective steer input; and
enhancing the traction for the first wheel of the vehicle with the applied oscillating actuation to the first wheel.

14. The system according to claim 13, wherein the processing circuitry is further configured for:
determining the low-traction condition being satisfied for the first wheel of the one or more wheels of the vehicle based on sensor data indicative of an operational velocity of the vehicle and sensor data indicative of a registered wheel-rotation for at least the first wheel of the one or more wheels of the vehicle.

15. A vehicle comprising:
a sensor system comprising one or more vehicle-mounted sensor devices; and
a system according to any one of claims 13 or 14.
